# EUROPÄISCHE PATENTSCHRIFT

(11) **EP 0 951 502 B1**
(45) Veröffentlichungstag und Bekanntmachung des Hinweises auf die Patenterteilung: **10.04.2002**
(21) Anmeldenummer: 98902986.3
(22) Anmeldetag: 08.01.1998
(51) Int. Cl.: C08J 9/24, C08J 9/28, B01D 67/00, B01D 71/26, B29C 43/00

(54) **PORÖSE FORMKÖRPER AUS THERMOPLASTISCHEN POLYMEREN**
POROUS MOULDED BODIES OF THERMOPLASTIC POLYMERS
CORPS DE MOULAGE POREUX EN POLYMERES THERMOPLASTIQUES

(30) Priorität: 11.01.1997 DE 19700760
(43) Veröffentlichungstag der Anmeldung: 27.10.1999
(73) Patentinhaber: Microdyn Modulbau GmbH & Co. KG., 42289 Wuppertal (DE)
(72) Erfinder: SAIER, Hans-Dieter, D-42855 Remscheid (DE)
(74) Vertreter: Luderschmidt, Schüler & Partner GbR
(86) Internationale Anmeldenummer: EP9800063
(87) Internationale Veröffentlichungsnummer: WO9830624

(56) Entgegenhaltungen:
- DE-A- 4 226 205
- DE-A- 4 434 670
- GB-A- 1 549 949
- GB-A- 2 115 425

## Beschreibung

Die Erfindung betrifft poröse, gesinterte Formkörper aus thermoplastischen Polymeren, Verfahren zu deren Herstellung sowie deren Verwendung.

Poröse Formkörper aus thermoplastischen Polymeren werden vielfach aus Lösungen hergestellt. So kann man beispielsweise, wie in der DE-C2-3 205 289 beschrieben wird, inbesondere poröse Membranen herstellen, indem man ein Polymer in einem speziellen Lösungsmittelgemisch über die obere kritische Entmischungstemperatur erhitzt, die Lösung abkühlt und das Lösungsmittel extrahiert.

Das dort beschriebene Verfahren, welches eine Weiterentwicklung des in der DE-OS 2 737 745 offenbarten sogenannten Accurelverfahrens darstellt, ist für die Herstellung von kompakteren Formkörpern wenig geeignet. Insbesondere lassen sich Formkörper wie poröse Rohre nur unter größten Schwierigkeiten kontinuierlich herstellen. Auch das in der DE-C2 4 226 205 offenbarte Verfahren zur Herstellung von porösen Polyolefinmembranen arbeitet mit einer Schmelzphase, die Phasentrennung wird thermisch induziert.

Man hat sich auch schon bemüht, durch Sintern Polymerpulver aus thermoplastischen Materialien zu verarbeiten. So wird in der US-PS 4 879 081 ein Verfahren beschrieben, bei dem molekular orientiertes thermoplastisches Material zerkleinert wird; die Partikel werden sodann einem Sinterprozeß unterworfen, um ein Material zu erhalten, in dem diskrete Teilchen mit anisotropen Eigenschaften verteilt sind. Bei der in dieser US-Patentschrift offenbarten Technologie entstehen aber keine porösen Formkörper.

Es ist auch bekannt, Pulver aus thermoplastischen Polymeren in einer Form zu sintern, ggf. unter Druck, und den Formling nach dem Abkühlen aus der Form zu entfemen. Nachteilig bei diesem Verfahren ist, daß es kontinuierlich nur sehr schwierig durchzuführen ist, daß man nur Sinterelemente von beschränkten Dimensionen herstellen kann, zB. etwa 1 m Länge und daß auch die Porengröße nur mit großen Mühen zu kontrollieren ist, so daß die Reproduzierbarkeit des Verfahrens zu wünschen übrig läßt.

In der GB-PS 1 549 949 wird ein Verfahren zur Herstellung von offenporigem polymerem Material beschrieben, bei dem thermoplastisches Polymer in Pulverform in Gegenwart einer organischen polaren Flüssigkeit, die einen Siedepunkt von 5 bis 20° C über der Erweichungstemperatur des Polymeren hat, unter Druck verpreßt; dieses Gebilde wird sodann mit einer Aufheizgeschwindigkeit von 20 bis 190°C pro Minute aufgeheizt, wobei die Flüssigkeit gasförmig entweicht und eine gerichtete Porenstruktur mit u.a. kanalförmigen Poren erzeugt. Durch die Anwesenheit von Kaliumbicarbonat, das sich unter diesen Prozeßbedingungen zersetzt, kann die Bildung der gerichteten Porenstruktur noch verstärkt werden.

In der DE-AS 2 657 943 wird ein Verfahren zur Herstellung von offenporigen Materialien beschrieben, bei dem zunächst bei einem Druck von 10 bis 250 kp/cm2 pulverförmiges Polymer in Gegenwart einer organischen Flüssigkeit verpreßt wird. Der Preßkörper wird anschließend erwärmt, wobei die Flüssigkeit unter Sieden entweicht und gerichtete, längliche Poren bildet. Nachteilig bei diesem Verfahren ist, daß es zweistufig und verhältnismäßig langsam arbeitet, nicht kontinuierlich durchgeführt werden kann und gerichtete Poren bildet.

Obwohl bereits zahlreiche Verfahren zur Herstellung von porösen Formkörpern bekannt sind, besteht noch ein Bedürfnis nach verbesserten Herstellungsverfahren, mit denen wirtschaftlich gesinterte Formkörper mit guten bzw. verbesserten Eigenschaften zugänglich sind und die sich vielseitig verwenden lassen.

Aufgabe der Erfindung ist es deshalb, ein Verfahren zur Verfügung zu stellen, das einfach und zuverlässig arbeitet, mit dem poröse Formkörper aus thermoplastischen Polymeren reproduzierbar mit einstellbarer Porosität und Porengröße zugänglich sind, das kontinuierlich durchführbar ist und das Formkörper mit wertvollen Eigenschaften liefert, die vielseitig verwendbar sind, das ferner schnell arbeitet und im wesentlichen ein isotrope Struktur erzeugt.

Diese Aufgabe wird gelöst durch ein Verfahren gemäß der Lehre von Patentanspruch 1. Weitere vorteilhafte Auführungsformen des erfindungsgemäßen Verfahrens werden in den Ansprüchen 2 bis 12 wiedergegeben. Ein weiterer Gegenstand der Erfindung sind poröse Formkörper, wie sie in den Ansprüchen 13 bis 15 beschrieben werden. Schließlich ist Gegenstand der Erfindung auch die Verwendung der Formkörper gemäß den Ansprüchen von 16 bis 25.

Zur Durchführung des erfindungsgemäßen Verfahrens werden pulverförmige, thermoplastische Polymere verwendet. Diese sind im Handel erhältlich und können auf an sich bekannter Weise z.B. durch Ausfällen von Polymerlösungen, durch Versprühen oder auch durch Zerkleineren von Polymermaterial erhalten werden. Die eingesetzten Pulver können aus einem Polymer, aber auch aus Polymergemischen bestehen. Die mittlere Größe der Pulverteilchen kann innerhalb weiter Grenzen liegen, z.B. 2 bis 300 Micrometer betragen, insbesondere 2 bis 80 Micrometer. Bevorzugt werden Pulver mit einer mittleren Komgröße von 2 bis 80 Micrometer verwendet.

Das insbesondere als Pulver mit einer Korngröße von 2 bis 65 Micrometer vorliegende Polymer wird sodann mit der oder den vorgesehenen Flüssigkeiten vermengt. Dabei können je nach den gewählten Gewichtsanteilen pastenförmige bis suspensionsartige Gemenge entstehen.

Als Polymere sind übliche thermoplastische, insbesondere synthetische Polymere wie Polyolefine, z.B. Polyethylen, Polypropylen, Polymethylpenten, usw. sowie entsprechende Copolymere, Polykondensationspolymere wie Polyester oder Polyamid 66, aber auch Polyamid 6 geeignet. Weitere thermoplastische Polymere werden in der deutschen Offenlegungsschrift Nr. 2 737 745, auf die sich hier ausdrücklich bezogen wird, aufgezählt. Besonders vorteilhaft ist hochmolekulares Polyethylen.

Die verwendete Flüssigkeit bzw. das verwendete Flüssigkeitsgemisch darf das Polymer beim Vermengen und beim Sintern nicht oder praktisch nicht lösen. Der Siedepunkt der Flüssigkeit oder des Flüssigkeitsgemisches ist mindesten so hoch wie die gewählte Sintertemperatur, liegt jedoch vorzugsweise oberhalb der Sintertemperatur, vorteilhaft mindestens 10°, insbesondere 30° C über der Sintertemperatur.

Neben organischen Flüssigkeiten, die unter den Sinterbedingungen gegenüber dem eingesetzen Polymer inert sind, d.h. auch chemisch nicht angreifen wie z.B. natürliche Öle, z.B. Soyaöl, Rhizinusöl, oder Glycerin, Polyglykole u.dgl. können auch anorganische Flüssigkeiten eingesetzt werden. So können selbst anorganische Säuren wie Schwefelsäure, wenn sie unter den Sinterbedingungen das Polymer nicht angreift, gemäß der Erfindung verwender werden.

Das Verhältnis Polymer/Flüssigkeit kann in weiten Grenzen eingestellt werden und beträgt vorteilhaft 1:4 bis 3:1. Vorzugsweise beträgt der Anteil der Flüssigkeit mindestens 30 Gewichtsprozent. Wichtig ist, daß genügend Flüssigkeit vorhanden ist, um beim Sintern die Pulverteilchen zu umgeben bzw. zu umhüllen, um so für eine optimale und gleichmäßige Erwärmung der Sintergemisches zu sorgen. Die Flüssigkeit dient im übrigen auch bei der kontinuierlichen Herstellung als Transporthilfsmittel.

Durch Variieren des Verhältnissen Polymer/Flüssigkeit lassen sich die Porosität und die Porengröße beeinflussen. So steigt mit zunehmendem Anteil Flüssigkeit die Porosität an. Durch Auswahl der Korngröße der Pulver kann man die Porengröße steuern. Durch Auswahl der Flüssigkeiten oder durch Einsatz von Flüssigkeitsgemischen mit unterschiedlichen Mischungsverhältnissen lassen sich die mechanischen Eigenschaften beeinflussen.

Das pasten- oder suspensionsartige Gemisch wird sodann, ggf. nach einem Vorerwärmen auf Temperaturen, die vorzugsweise mehrere Grade unterhalb der Sintertemperatur liegen, in eine formgebende Vorrichtung gebracht. Dies kann beispielsweise eine Form zur Herstellung von Platten sein, aber auch ein Formwerkzeug mit Mantel und Dorn zur Herstellung von Rohren. Das Sintern findet in der Form statt. Dabei soll ein Entweichen von Flüssigkeit vermieden werden. Dies kann z.B. dadurch geschehen, daß in einer geschlossenen Form gesintert wird.

Die Sintertemperatur hängt von dem Schmelzpunkt des verwendeten Polymers, aber auch von der Sinterdauer ab; sie soll so hoch sein, daß ein Verbinden der Polymerpulverteilchen stattfindet. Dabei verkleben die Teilchen mehr oder weniger an den Stellen, wo sie sich berühren. Dabei kann auch ein Zusammenschmelzen an diesen Berührungszonen eintreten. So können bei sehr kurzen Sinterzeiten, wie sie bei dem erfindungsgemäßen Verfahren möglich sind, z.B. einige Sekunden wie 10 bis 20 Sekunden sogar etwa bei der Schmelztemperatur gesintert werden. Diese Zeiten sind so bemessen, daß ein völliges Aufschmelzen und Ineinanderlaufen der Teilchen nicht stattfindet.

Vor allem aber bei längeren Sinterzeiten liegt die Sintertemperatur knapp oder mehrere Grade unterhalb des Schmelzpunkts des verwendeten Polymers. Polyolefinpulver werden zweckmäßig bei 160 bis 210° C gesintert.

Nach dem Sintern in der Form tritt der Formling aus der Form wahlweise kontinuierlich oder diskontinuierlich heraus und wird ggf. gekühlt, z. B. bei der Herstellung von Rohren. Diese können dann z.B. gleich auf die gewünschte Länge geschnitten werden; es ist aber auch möglich, sie zuerst "endlos" zu lassen und z.B. auf einen Rolle aufzurollen.

Das Verfähren läßt sich auch sehr vorteilhaft kontinuierlich durchführen, z.B. indem man das Gemisch Polymer/Flüssigkeit kontinuierlich einem langförmigen Werkzeug zum Formen von Rohren zuführt und den Sintervorgang innerhalb des Werkzeugs durchführt. Eine zum Fördern des Gemisches dienende Pumpvorrichtung preßt dasselbe in das Werkzeug. Der Dorn kann aus Glas bestehen und bildet zusammen mit dem Mantel den Rohrformkanal. Die Erwärmung erfolgt über das Außenrohr. Sie kann aber auch über das Innenrohr erfolgen; auch ein Erwärmen von Innen und Außen ist möglich. Zweckmäßig wird der Formling noch vor dem Verlassen des langförmigen Formwerkzeuges gekühlt. Das verwendete Formwerkzeug kann in mehrere Temperaturzonen unterteilt sein, z.B. eine Vorwärmzone, eine Sinterzone und eine Abkühlzone. Dabei ist es möglich mit sehr kurzen Formwerkzeugen zu arbeiten, z.B. von 20 bis 30 cm Länge. Das Rohr verläßt kontinuierlich das Werkzeug und kann beliebig lang ausgebildet werden.

Das Aufheizen bis auf Sintertemperatur kann sehr schnell geschehen z.B. mit Geschwindigkeiten von bis zu 600 bis 1 200° C/min. So kann beispielsweise bei der kontinierlichen Herstellung von Rohren innerhalb von 10 Sekunden von 20° C bis auf 220° C aufgeheizt werden.Während der Sinterung siedet die verwendete Flüssigkeit, z.B. ein Öl nicht, das Sintern erfolgt somit blasenfrei, es entsteht eine isotrope Struktur, d.h. die Poren weisen keine gerichtete Struktur auf und sind gleichmäßig im Material verteilt. Der mittlere Porendurchmesser liegt im allgemeinen zwischen 0,2 bis 50 Mikrometer, bevorzugt zwischen 0,5 bis 10 Mikrometer.

Die Flüssigkeit kann auf verschiedene Weise entfernt werden, beispielsweise durch Ausblasen mittels eines Gases. Vorzugsweise wird sie jedoch durch Extraktion entfernt.

Die Struktur und die Eigenschaften der erhaltene Sinterformkörper lassen sich durch Einstellen der verschiedenen Verfahrensparameter steuern. So können Elastizität, Festigkeit, Härte, Sprödigkeit, Abrieb, Porosität und Durchlässigkeit für verschiedenste Substanzen z.B. durch Wahl des Polymers und entsprechender Flüssigkeiten sowie deren relativen Mengenverhältnisse, der Sintertemperatur und Sinterdauer, des beim Sintern angewandten Drucks und der Korngröße der eingesetzten Pulver sowie ggf. durch Zusatz von Additiven beeinflußt werden.

Nach dem Verfahren gemäß der Erfindung lassen sich die verschiedensten Formkörper herstellen, z.B. Platten, Stangen, tablettenförmige Körper, Rohre usw. Die Formkörper sind sehr vielseitig verwendbar und können z.B. als Unterlagen für Filtertücher oder Filtermembranen, als Verteilkörper für Flüssigkeiten oder Gase, als Filtermaterial, für Adsorptionszwecke usw. eingesetzt werden..

Auf Grund ihre hervorragenden Saugkraft und Absorptionsfähigkeit können mit Hilfe von beispielsweise Rohren gemäß der Erfindung Öle aus Abwässern entfernt werden. Dabei werden z.B. ein oder mehrere Rohre z.B senkrecht in das Absetzbecken gesteckt, so daß der obere Teil der Rohre oberhalb des Flüssigkeitsspiegels ist und der untere Teil mit einem Ableitungssystem verbunden ist. Der sich auf dem Wasser absetzende Ölfilm saugt sich quasi selbst in die Rohre ein, das Öl wird durch die Rohre abgeleitet.

Die Formkörper gemäß der Erfindung sind auch sehr geeignet zum Behandeln von Bädern wie Beizbäder und dergleichen. Ein weiteres Einsatzgebiet ist die Verwendung als Koalescierungselement, z.B. zum Koalescieren von Natronlauge bei der Polycarbonatherstellung.

Es war besonders überraschend, daß sich entsprechend der Erfindung Sinterkörper aus thermoplastischen Polymeren mit so hervorragenden Eigenschaften herstellen lassen und daß es möglich wurde, nun auch kontinuierlich Formkörper mit größeren Dimensionen, z,B. Rohre mit beliebiger Länge einfach herzustellen.

Das erfindungsgemäße Verfahren läßt sich wirtschaftlich sehr vorteilhaft durchführen, ist gut kontrollierbar und führt zu reproduzierbaren Ergebnissen, was besonders bei kontinuierlicher Fahrweise von großem Vorteil ist. Durch Variation der einzelnen Verfahrensparameter wie eingesetzte Polymerart, Zusammensetzung von Polymergemischen, Sintertemperatur und Sinterdauer, Korngröße des Pulvers, Verhältnisse Flüssigkeit/Polymerpulver lassen sich gezielt innerhalb eines breiten Eigenschaftsspektrum Formkörper mit hervorragender Performance erhalten.

Die Formkörper sind sehr vielseitig einsetzbar und weisen anwendungstechnisch sehr interessante Eigenschaften auf.

Besonders bei Einsatz von hochpolymerem Polyethylen lassen sich poröses Formkörper mit hervorragender chemischer Stabilität wie ausgezeichnete Oxidationsbeständigkeit, Beständigkeit gegen Wasserstoffperoxid und Chlorbeständigkeit erhalten.

Die Erfindung wird an Hand folgender Beispiele näher erläutert

### Beispiel 1

Eine Mischung aus 56 Gewichtsteilen Polyethylenpulver GUR X 117 der Firma Hoechst AG mit einer mittleren Korngröße von 65 Micrometer und 44 Gewichtsteilen eines Gemischs aus Soyaöl und Rhizinusöl (75 : 25 Vol.-Teile) wurde kontinuierlich über eine Fördereinrichtung in ein langförmiges Rohrformwerkzeug mit Dorn und Mantel eingebracht; die Temperatur im Werkzeug betrug 180° C. Nach Verlassen der Form wurde abgekühlt und anschließend durch Extraktion mit Alkohol das Ölgemisch entfernt. Das erhaltene Rohr ist porös, die Porengröße, bestimmt nach der Blaspunktmethode, betrug 3 Micrometer.

### Beispiel 2

Es wurde in gleicher Weise wie in Beipiel 1 angegeben , ein Rohr hergestellt. Es wurde lediglich anstelle des Gemisches Soyaöl/Rhizinusöl Soyaöl als Flüssigkeit verwendet. Das nach Beispiel 2 erhaltene zeichnet sich gegenüber dem Rohr nach Beispiel 1 durch eine geringere Flexibilität aus.

### Beispiel 3

In gleicher Weise wie in Beispiel 1, jedoch unter Verwendung eines rohrförmigen Werkzeugs wurde ein stabförmige Formkörper hergestellt, der porös war und die gleiche Porengröße wie das Rohr gemäß Beispiel 1 aufwies.

## Patentansprüche

1. Verfahren zur Herstellung von porösen Formkörpern aus thermoplastischen Polymeren, **dadurch gekennzeichnet, daß** man ein Gemisch aus pulverförmigem Polymer und einer Flüssigkeit, deren Siedetemperatur mindestens gleich oder höher als die Sintertemperatur ist, in eine formgebende Vorrichtung gibt, das Gemisch dort sintert, ggf. abkühlt, und die Flüssigkeit abtrennt.

2. Verfahren nach Anspruch 1, d.g., daß man während des Sinterns das Entweichen von Flüssigkeit vermeidet.

3. Verfahren nach Anspruch 2, d.g., daß man das Sintem in einer nach außen dichten Form durchführt.

4. Verfahren nach mindestens einem der Ansprüche 1 bis 3, d.g., daß man ein Gemisch von Polymeren verwendet.

5. Verfahren nach mindestens einem der Ansprüche 1 bis 4, d.g., daß man Gemische von organischen Flüssigkeiten verwendet.

6. Verfahren nach mindestens einem der Ansprüche 1 bis 5, d.g., daß man Polymere in Pulverform mit einer mittleren Korngröße von 2 bis 175 Micrometer verwendet.

7. Verfahren nach mindestens einem der Ansprüche 1 bis 6, d.g., daß man Polymere und Flüssigkeit in einem Gewichtsverhältnis von 1: 4 bis 3:1 einsetzt und der Anteil an Flüssigkeit vorzugsweise mindestens 30 Gewichtsprozent beträgt.

8. Verfahren nach mindestens einem der Ansprüche 1 bis 7, d.g., daß man als Polymer Polyolefine verwendet.

9. Verfahren nach Anspruch 8, d.g., daß man Polyolefine mit einem Molekulargewicht von 300 000 bis 10 000 000 Dalton verwendet.

10. Verfahren nach mindestens einem der Ansprüche 1 bis 9, d.g., daß man das Gemisch aus Polymer und Flüssigkeit vor dem Sintern vorwärmt.

11. Verfahren nach mindestens einem der Ansprüche 1 bis 10, d.g., daß man Formen und Sintern kontinuierlich durchführt.

12. Verfahren nach mindestens einem der Ansprüche 1 bis 11, d.g., daß man die Flüssigkeit nach dem Sintern durch Extraktion entfernt.

13. Poröse Formkörper, hergestellt nach einem Verfahren gemäß einem der Ansprüche 1 bis 12 mit einer Porosität von 20 bis 60% und einer mittleren Porengröße von 0,2 bis 50 Micrometer.

14. Formkörper in Form von porösen Rohren nach Anspruch 13 mit einem Außendurchmesser von 0,05 bis 2,5 cm und einem Innendurchmesser von 0,03 bis 2 cm.

15. Formkörper nach Anspruch 13 oder 14, d.g., daß er aus Polyethylen besteht

16. Verwendung der Formkörper nach Anspruch 13 in Form von Platten als Unterlegplatten für Filtertücher und Filtermembranen.

17. Verwendung der Formkörper nach Anspruch 13 als Filterelemente.

18. Verwendung der Formkörper nach Anspruch 13 als Koalescierungselemente.

19. Verwendung der Formkörper nach Anspruch 13, 14 oder 15 als Saugelemente für freie Öle.

20. Verwendung der Formkörper nach einem der Ansprüche 13 bis 15 als Begasungs- oder Belüftungselemente.

21. Verwendung der Formkörper nach einem der Ansprüche 13 bis 15 als Träger für die Aufnahme oder Abgabe von Wirkstoffen.

22. Verwendung nach Anspruch 21 für die Aufnahme und Abgabe von Insektiziden.

23. Verwendung nach Anspruch 21 für die Aufnahme und Abgabe von Desinfektionsmitteln.

24. Verwendung nach Anspruch 21 für die Aufnahme und Abgabe von Duftmitteln.

25. Verwendung nach Anspruch 21 für die Aufnahme und Abgabe von Düngemitteln.

## Claims

1. A process for the manufacture of porous moulded bodies of thermoplastic polymers, **characterized in that** a mixture of a powdery polymer and a liquid having a temperature of ebulliton which is equal or greater than its sinter temperature is introduced into a shaping device, that the mixture is sintered therein and, if necessary, is cooled, and the liquid is separated.

2. The process of claim 1, **characterized in that**, in the course of sintering, disengagement of the liquid is prevented.

3. The process of claim 2, **characterized in that** sintering is executed in a mould that is tight to the environment.

4. The process of at least one of claims 1 to 3, **characterized in that** a mixture of polymers is used.

5. The process of at least one of claims 1 to 4, **characterized in that** mixtures of organic liquids are used.

6. The process of at least one of claims 1 to 5, **characterized in that** powdery polymers are used having a mean grain size of 2 µm to 175 µm.

7. The process of at least one of claims 1 to 6, **characterized in that** polymers and liquids are used in a weight ratio from 1:4 to 3:1 and that the share of liquid preferably amounts to at least 30 percent by weight.

8. The process of at least one of claims 1 to 7, **characterized in that** polyolefins are used as the polymer.

9. The process of claim 8, **characterized in that** polyolefins are used having a molecular weight of 300.000 to 10.000.000 daltons.

10. The process of at least one of claims 1 to 9, **characterized in that**, prior to sintering, the mixture of the polymer and the liquid is preheated.

11. The process of at least one of claims 1 to 10, **characterized in that** moulding and sintering is executed continuously.

12. The process of at least one of claims 1 to 11, **characterized in that**, after sintering, the liquid is removed by extraction.

13. Porous moulded bodies produced by a process according to one of claims 1 to 12 and having a porosity of 20% to 60% and a mean pore size of 0.2 to 50 µm.

14. Moulded bodies in the form of porous tubes according to claim 13 having an outside diameter of 0.05 cm to 2.5 cm and an inside diameter of 0.03 cm to 2 cm.

15. Molded body of claim 13 or 14, **characterized in that** it is made of polyethylene.

16. Use of the moulded bodies of claim 13 in the form of sheets as a base sheet for filter lawns or filter membranes.

17. Use of the moulded bodies of claim 13 as filter elements.

18. Use of the moulded bodies of claim 13 as coalescence enhancing elements.

19. Use of the moulded bodies of claim 13, 14 or 15 as absorbing elements for free oils.

20. Use of the moulded bodies of one of claims 13 to 15 as gas distributing or aerating elements.

21. Use of the moulded bodies of one of claims 13 to 15 as support for the reception or release of active agents.

22. Use of claim 21 for the reception or release of insecticides.

23. Use of claim 21 for the reception or release of disinfectants.

24. Use of claim 21 for the reception or release of flavours.

25. Use of claim 21 for the reception or release of fertilizers.

## Revendications

1. Procédé pour la fabrication de corps de moulage poreux en polymères thermoplastiques, **caractérisé en ce que** l'on introduit un mélange en polymère pulvérisé et un liquide dont la température d'ébolution est au moins égale à ou plus élevée que la température pour le frittage dans un dispositif de façonnage, que l'on y fritte le mélange et, le cas échéant, le fait refroidir et que l'on sépare le liquide.

2. Procédé selon la revendication 1, **caractérisé en ce que** l'on évite que le liquide se dégage au cours du frittage.

3. Procédé selon la revendication 2, **caractérisé en ce que** le frittage est exécuté dans un moule étanche vers les environs.

4. Procédé selon au moins une des revendications 1 à 3, **caractérisé en ce que** l'on utilise un mélange de polymères.

5. Procédé selon au moins une des revendications 1 à 4, **caractérisé en ce que** l'on utilise des mélanges de liquides organiques.

6. Procédé selon au moins une des revendications 1 à 5, **caractérisé en ce que** l'on utilise des polymères pulvérisés ayant un grosseur moyen des grains de 2 µm à 175 µm.

7. Procédé selon au moins une des revendications 1 à 6, **caractérisé en ce que** l'on utilise les polymères et le liquide dans un rapport du poids de 1:4 à 3:1 et que le pourcentage du liquide se monte de préférence à 30 pourcents en poids.

8. Procédé selon au moins une des revendications 1 à 7, **caractérisé en ce que** l'on utilise un polyoléfine en tant que polymère.

9. Procédé selon la revendication 8, **caractérisé en ce que** l'on utilise des polyoléfines d'un poids moléculaire de 300 000 à 10 000 000 daltons.

10. Procédé selon au moins une des revendications 1 à 9, **caractérisé en ce que** l'on préréchauffe le mélange du polymère et du liquide avant son frittage.

11. Procédé selon au moins une des revendications 1 à 10, **caractérisé en ce que** l'on exécute le moulage et le frittage d'une façon continue.

12. Procédé selon au moins une des revendications 1 à 11, **caractérisé en ce que** l'on enlève le liquide aprés le frittage au moyen d'extraction.

13. Corps de moulage poreux fabriqués d'après un procédé selon une des revendications 1 à 12 ayant une porosité de 20 à 60% et une grosseur de pore moyenne de 0,2 à 50 µm.

14. Corps de moulage en forme de tuyaux poreux selon la revendication 13 ayant un diamètre extérieur de 0,05 à 2,5 cm et un diamètre intérieur de 0,03 à 2 cm.

15. Corps de moulage selon la revendication 13 ou 14, **caractérisé en ce qu'**il consiste en polyéthylène.

16. Utilisation des corps de moulage selon la revendication 13 en forme de feuilles en tant que feuilles de support pour des tissus filtrants et des membranes filtrants.

17. Utilisation des corps de moulage selon la revendication 13 en tant qu'éléments filtrants.

18. Utilisation des corps de moulage selon la revendication 13 ent tant qu'éléments d'intensifications de la coalescence.

19. Utilisation des corps de moulage selon la revendication 13, 14 ou 15 ent tant qu'éléments aspirants pour des huiles libres.

20. Utilisation des corps de moulage selon une ses revendications 13 à 15 ent tant qu'éléments de disposition de gaz ou d'aération.

21. Utilisation des corps de moulage selon une ses revendications 13 à 15 ent tant que support pour la réception ou le dégagement de matière active.

22. Utilisation selon la revendication 21 pour la réception ou le dégagement d'insecticides.

23. Utilisation selon la revendication 21 pour la réception ou le dégagement de désinfectants.

24. Utilisation selon la revendication 21 pour la réception ou le dégagement de substances odorantes.

25. Utilisation selon la revendication 21 pour la réception ou le dégagement de substances fertilisantes.
